# EUROPÄISCHE PATENTSCHRIFT

(11) **EP 4 201 000 B1**
(45) Veröffentlichungstag und Bekanntmachung des Hinweises auf die Patenterteilung: **11.12.2024**
(21) Anmeldenummer: 21727841.5
(22) Anmeldetag: 20.05.2021
(51) Int. Cl.: H04L 67/125, H04L 67/12

(54) **ANPASSUNG DER DATENÜBERTRAGUNG VON EINER STEUERUNGSVORRICHTUNG ZU EINEM CLOUD-SYSTEM MITTELS MASCHINELLEN LERNENS**
ADJUSTING THE DATA TRANSMISSION FROM A CONTROL DEVICE TO A CLOUD SYSTEM BY MEANS OF MACHINE LEARNING
ADAPTATION DE LA TRANSMISSION DE DONNÉES D'UN DISPOSITIF DE COMMANDE À UN SYSTÈME EN NUAGE PAR APPRENTISSAGE AUTOMATIQUE

(30) Priorität: 18.08.2020 DE 102020005055
(43) Veröffentlichungstag der Anmeldung: 28.06.2023
(73) Patentinhaber: Wago Verwaltungsgesellschaft mbH, 32423 Minden (DE)
(72) Erfinder: HELLER, Michael, 78112 St. Georgen (DE); GOJ, Raphael, 78112 St. Georgen (DE); DITTGEN, Josha, 78052 Villingen-Schwenningen (DE)
(74) Vertreter: Bardehle Pagenberg Partnerschaft mbB Patentanwälte Rechtsanwälte
(86) Internationale Anmeldenummer: PCT/EP2021/063483
(87) Internationale Veröffentlichungsnummer: WO 2022/037812

(56) Entgegenhaltungen:
- CN-A- 111 371 842
- US-A1- 2013 212 420
- KOYCHEV I ET AL: "Adaptation to drifting user's interests", ABSTRACT, 1 January 2000 (2000-01-01), pages 1 - 7, XP055803362, Retrieved from the Internet <URL:http://citeseerx.ist.psu.edu/viewdoc/download;jsessionid=65601346F35D29115E726ED7CC3AD3BA?doi=10.1.1.80.1757&rep=rep1&type=pdf>
- KOYCHEV IVAN ET AL: "Adaptation to Drifting User's Interests", 1 August 2004 (2004-08-01), XP055820395, Retrieved from the Internet <URL:https://www.researchgate.net/publication/2948684_Adaptation_to_Drifting_User's_Interests> [retrieved on 20210701]

## Beschreibung

### 1. Technisches Gebiet

Die Erfindung betrifft allgemein das Gebiet der Automatisierungstechnik und insbesondere Verfahren und Techniken zur effizienten Datenübertragung von einer industriellen Steuerungsvorrichtung zu einem Cloud-System und/oder einem entfernten Computer, z.B. einer Webanwendung.

### 2. Hintergrund

Im Zuge der vierten industriellen Revolution und der alles durchdringenden Digitalisierung auch und gerade in der industriellen Automatisierungstechnik werden zunehmend Cloud-Lösungen zur Analyse, Verwaltung und teils sogar zur Steuerung der Komponenten der Automatisierungsumgebung eingesetzt.

Hierbei werden üblicherweise von industriellen Steuerungsvorrichtungen zur Laufzeit Daten erzeugt und an ein oder mehrere Cloud-Systeme gesendet. Bei einer industriellen Steuerungsvorrichtung kann es sich beispielsweise um eine speicherprogrammierbare Steuerung (SPS) handeln. Eine solche Vorrichtung ist typischerweise mit einem oder mehreren Sensoren und/oder Aktoren kommunikativ verbunden und realisiert Aufgaben im Kontext der Automatisierungstechnik.

Ein Cloud-System kann im Rahmen der Erfindung allgemein ein von der Steuerungsvorrichtung entferntes Computersystem umfassen. Als Beispiele seien die WAGO Cloud, Microsoft Azure, Amazon AWS ("Amazon Web Services"), die SAP Cloud oder die IBM Cloud genannt. Innerhalb des Cloud-Systems werden die empfangenen Daten üblicherweise gespeichert, ausgewertet und/oder Benutzern für beliebige Endgeräte aufbereitet zur Verfügung gestellt. Die Verbindung der Steuerungsvorrichtungen mit dem bzw. den Cloud-Systemen kann kabelgebunden oder kabellos (z.B. über Mobilfunktechnologien) ausgebildet sein.

Die Geräte innerhalb der Automatisierungsumgebung, beispielsweise die oben erwähnten industriellen Steuerungsvorrichtungen, werden in diesem Zusammenhang oft auch als Edge-Geräte bezeichnet. Unter einem Edge-Gerät sei allgemein ein Gerät verstanden, welches zwar an ein entferntes Computersystem, insbesondere ein Cloud-System, angebunden ist, trotzdem aber eine lokale und daher dezentrale Datenverarbeitung vornimmt, beispielsweise um Daten vor der Übertragung in die Cloud bzw. an das entfernte Computersystem aufzubereiten.

Welche Daten eine industrielle Steuerungsvorrichtung an das Cloud-System senden soll, wird typischerweise in der Steuerungsvorrichtung, beispielsweise im SPS-Programm durch einen (SPS-)Entwickler programmiertechnisch definiert. Anders gesagt werden die zu übertragenden Daten typischerweise zur Entwicklungszeit ausgewählt und festgelegt. Die eigentliche Verwendung der Daten innerhalb des Cloud-Systems wird jedoch typischerweise nicht durch den (SPS-)Entwickler, sondern durch den bzw. die Cloud-Benutzer bestimmt, beispielsweise indem Dashboard-Elemente erstellt werden, Alarmregeln definiert werden, Trends angelegt werden, Exporte durchgeführt werden, oder dergleichen. Welche der von der industriellen Steuerungsvorrichtung gelieferten Daten dann innerhalb oder außerhalb des Cloud-Systems entsprechend Anwendung finden werden, ist zum Zeitpunkt der Definition der Datenübertragung nicht unbedingt bekannt. Ferner ist es auch denkbar, die Definition der Datenübertragung nachträglich anzupassen, z.B. durch Auswahl eines Benutzers über eine entsprechende Anwendung, welche die Auswahl innerhalb der Steuerungsvorrichtung anpasst
Diese Vorgehen sind jedoch unflexibel und eine Änderung der zu übertragenden Daten und/oder Übertragungscharakteristiken ist aufwändig. Insbesondere werden durch das erstgenannte vorbekannte Verfahren oft auch Daten übertragen, welche im Cloud-System nicht genutzt werden und somit unnötig sind. Das Übertragen überflüssiger Daten und deren Vorhalten innerhalb des Cloud-Systems kann einen teils erheblichen Ressourcenverbrauch und dadurch hohe Kosten hervorrufen.

Denn das Senden von Daten von industriellen Geräten an Cloud-Systeme und die hierfür benötigte Datenverbindung ist mit negativen Eigenschaften behaftet. Beispielsweise ist die Datenübertragung im industriellen Kontext oft mit nutzungsabhängigen Kosten verbunden, d.h. je mehr Daten übertragen werden sollen, desto teurer kann dies werden. Die Kosten resultieren z.B. aus dem entstehenden Traffic und/oder der Anzahl der eingehenden Nachrichten in das Cloud-System. Des Weiteren ist die Datenübertragungsrate physikalisch oft limitiert, was bedeutet, dass nicht beliebig viele Daten übertragen werden können. Je mehr Geräte sich eine Verbindung teilen, je geringer ist die mögliche Datenübertragungsrate. Vor allem im Kontext des Internets, aber auch in einem Intranet, kann eine Datenverbindung ferner auch durch Ausfälle beeinträchtigt sein.

Auf einem anderen technischen Gebiet, nämlich dem Betrieb von Mobilfunknetzen, ist es beispielsweise aus DE 103 17 563 A1 bekannt, die Menüpunkte bzw. Menüführung eines Mobilfunk-Portals auf das individuelle Nutzungsverhalten der Mobilfunknutzer anzupassen. Hierbei wird ein menügesteuertes Mobilfunk-Portal über das Mobilfunknetz von einer Zentraleinheit an die Mobilfunkendgeräte übermittelt und dort lokal ausgeführt. Die Zentraleinheit wertet aus, welche Menüpunkte wie oft, zu welcher Zeit bzw. an welchem Ort auf den Mobilfunkendgeräten ausgewählt wurden, wodurch Nutzerprofile erstellt und das Mobilfunk-Portal individuell angepasst werden kann. Ein solches Konzept, bei welchem das Nutzerverhalten auf den lokalen Mobilfunkendgeräten erfasst wird, ist jedoch für die vorliegende Erfindung unbrauchbar, da wie eingangs erläutert im industriellen Kontext nicht die Nutzer der lokalen Steuerungsvorrichtungen, sondern vielmehr die Nutzer des entfernten Cloud-Systems darüber entscheiden, welche Daten letztendlich relevant sind.

Aus dem Dokument US 2013/0212420 A1 ist ein Cloud-kompatibles Industriegerät bekannt, welches mit Zeitstempeln versehene industrielle Daten an eine Cloudplattform bereitstellt. Eine Cloud-Applikation kann hierbei dynamisch eine passende Upload-Frequenz für die Daten von den Industriegeräten auswählen.

Aus der Veröffentlichung von Ivan Koychev und Ingo Schwab: "Adaptation to Drifting User's Interests" ist ein Verfahren bekannt, mit dem eine Internet-Suchmaschine dynamisch an sich ändernde Interessen der Nutzer angepasst werden kann. Hierbei wird die Idee des graduellen Vergessens verwendet.

Der vorliegenden Erfindung liegt deshalb das Problem zugrunde, ein Verfahren zur effizienteren Datenübertragung von einer industriellen Steuerungsvorrichtung zu einem Cloud-System bereitzustellen, das die eingangs genannten Nachteile des Standes der Technik zumindest zum Teil überwindet.

### 3. Zusammenfassung der Erfindung

Dieses Problem wird durch die Gegenstände der unabhängigen Patentansprüche gelöst, wobei die Unteransprüche bevorzugte Weiterbildungen betreffen.

So betrifft Anspruch 1 ein Verfahren zur Anpassung der Datenübertragung von einer industriellen Steuerungsvorrichtung an ein Cloud-System, wobei das Verfahren die folgenden von einer Cloud-Applikation durchgeführten Schritte umfasst: Ermitteln eines Nutzungsverhaltens mittels maschinellen Lernens, wobei das Nutzungsverhalten sich auf die Nutzung der von der industriellen Steuerungsvorrichtung übertragenen Daten, insbesondere Prozessdaten, durch das Cloud-System oder ein damit verbundenes Computersystem bezieht, und Senden zumindest eines Befehls an die industrielle Steuerungsvorrichtung zur Anpassung der Datenübertragung von der industriellen Steuerungsvorrichtung an das Cloud-System basierend auf dem ermittelten Nutzungsverhalten.

Eine Grundidee ist demnach, durch maschinelles Lernen innerhalb des Cloud-Systems das (vorzugsweise regelmäßige bzw. wiederkehrende) Nutzungsverhalten der Benutzer (bzw. auch mehrerer Benutzer bzw. Nutzerverhalten) hinsichtlich der Verwendung der von der Steuerungsvorrichtung gelieferten Daten zu lernen und die Datenübertragung darauf basierend anzupassen und/oder schrittweise zu optimieren. Hierdurch kann das Übertragen und Vorhalten überflüssiger Daten innerhalb des Cloud-Systems reduziert werden. Diese Reduzierung hilft dabei, Ressourcen innerhalb des Cloud-Systems zu sparen. Des Weiteren wird der Traffic hinsichtlich der Datenverbindung reduziert, was gerade im industriellen Kontext und/oder bei Mobilfunkverbindungen besonders vorteilhaft ist.

Das ermittelte Nutzungsverhalten kann eine Menge von Werten umfassen, welche beispielsweise zumindest eine Verwendungshäufigkeit, zumindest eine Verwendungsdauer und/oder zumindest einen Verwendungszeitpunkt repräsentieren. Diese Parameter (d.h. die Verwendungshäufigkeit, Verwendungsdauer, Verwendungszeitpunkt, usw.) basieren vorzugsweise auf Eingaben durch einen oder mehrere Benutzer, wobei die Eingaben sich direkt und/oder indirekt auf die Parameter auswirken können. Solche Benutzereingaben können vielfältiger Natur sein, z.B. manuelle Mauseingaben, Tastatureingaben, Spracheingaben, Eingaben mittels Eye-Tracking, Öffnen einer Anwendung, Klick eines Button, usw.). Die Parameter können beispielsweise aus Login-Zeiten, einer Zugriffszeit und/oder Zugriffsdauer auf Projekte, Dashboards, Funktionen (z.B. zum Export), usw., und/oder Mausinteraktionen ermittelt werden.

Zusätzlich oder alternativ kann das ermittelte Nutzungsverhalten auch zumindest eine Verwendungsart umfassen. Diese kann beispielsweise ermittelt werden, indem analysiert wird, ob die zugehörigen Daten Verwendung finden in Alarmen (diese Daten werden vorzugsweise immer gesendet), Dashboards, Trends und/oder für Exporte (z.B. in andere Systeme).

Der zumindest eine Befehl zur Anpassung der Datenübertragung kann ein Befehl sein zum Auswählen einer Untermenge der Daten zur Übertragung, zum Nicht-Senden bestimmter Daten, zum Umleiten bestimmter Daten zu einem anderen Datenspeicher, zum Senden von Datenaggregaten, insbesondere von Minimalwerten und/oder Maximalwerten, zum Anpassen eines Zeitintervalls, insbesondere einer Sampling-Rate und/oder Publishing-Rate, bestimmter Daten, und/oder zum Gruppieren von Daten. Durch die genannten Anpassungen bzw. Kombinationen hiervon können weitreichende Kosten-Nutzen-Optimierungen erzielt werden. Vorzugsweise ist ein Befehl hierbei ein Kommando, das automatisch erzeugt und dann an die Steuerungsvorrichtung gesendet wird, wo es so umgesetzt wird, dass die Datenübertragung gemäß dem Kommando angepasst wird, z.B. durch Anpassung im SPS-Programm oder Änderungen von Steuerungsvorrichtungs-seitigen Konfigurationen.

Vorzugsweise wird das Nutzungsverhalten über eine vorgegebene Zeitspanne ermittelt, beispielsweise über einen Zeitraum, in dem mehrere direkte und/oder indirekte Eingaben, Interaktionen, usw. erfolgen. Das Verfahren kann ferner ein Erstellen eines Vorhersagemodells für eine zukünftige Nutzung der Daten umfassen, wobei der zumindest ein Befehl zur Anpassung der Datenübertragung basierend auf dem Vorhersagemodell dient. Vorzugsweise wird das Nutzungsverhalten kontinuierlich bzw. regelmäßig ermittelt. Das Nutzungsverhalten kann sich auf die Nutzung der Daten durch einen oder mehrere Benutzer oder einer Benutzergruppe beziehen.

In einem weiteren Aspekt der Erfindung kann die Steuerungsvorrichtung einen OPC-Server, vorzugsweise einen OPC UA-Server, umfassen und/oder das Computersystem kann einen OPC-Client, vorzugsweise einen OPC UA-Client, umfassen.

Die beschriebenen Verfahren können auch ein Empfangen von Daten von der industriellen Steuerungsvorrichtung umfassen, ohne dass eine initiale Auswahl der Daten auf der industriellen Steuerungsvorrichtung erfolgt ist. Hierbei sendet die Steuerungsvorrichtung initial alle ihr verfügbaren Daten an das Cloud-System, sodass das Cloud-System sodann die oben beschriebenen Optimierungen der Datenübertragung durchführen kann.

Ferner können in einem weiteren Aspekt auch alle oder einige in der Steuerungsvorrichtung grundsätzlich verfügbaren Daten manuell wieder ausgewählt werden, z. B. über eine Webanwendung. Hierdurch kann jederzeit auch auf Daten zugegriffen werden, welche vom System ggf. selbstständig abgewählt wurden. Diese Daten können je nach Konfiguration auf der Steuerungsvorrichtung oder einem anderen System ggf. auch zwischengespeichert werden.

Die Erfindung betrifft ferner ein System zur Anpassung der Datenübertragung von einer industriellen Steuerungsvorrichtung an ein Cloud-System, wobei das System konfiguriert ist zum Durchführen der oben beschriebenen Verfahren. Außerdem wird ein Computerprogramm bereitgestellt mit Anweisungen zum Implementieren der oben beschriebenen Verfahren.

### 4. Kurze Beschreibung der Zeichnungen

Im Folgenden werden bevorzugte Ausführungsbeispiele der vorliegenden Erfindung unter Bezugnahme auf die begleitenden Figuren erläutert:
- Fig. 1:: Eine schematische Darstellung einer Systemumgebung für Ausführungsformen der Erfindung;
- Fig. 2:: Beispiele für erfasstes Nutzungsverhalten und die Vorhersage des zu erwartenden Nutzungsverhaltens gemäß Ausführungsformen der Erfindung;
- Fig. 3:: Die Systemübersicht aus Fig. 1 mit vergrößert dargestelltem Cloud-System und maschinellem Lernsystem gemäß Ausführungsformen der Erfindung; und
- Fig. 4:: Ein beispielhaftes neuronales Netzwerk gemäß Ausführungsformen der Erfindung.

### 5. Detaillierte Beschreibung bevorzugter Ausführungsformen

Im Folgenden werden gegenwärtig bevorzugte Ausführungsbeispiele eines erfindungsgemäßen Systems und Verfahrens zur effizienten Datenübertragung zwischen einer industriellen Steuerungsvorrichtung und einem Cloud-System genauer erläutert. Der Begriff "industriell" ist hierbei allgemein zu verstehen und beschränkt sich nicht auf klassische Fertigungssysteme. Vielmehr ist auch eine Anwendung beispielsweise im Kontext der Gebäudeautomatisierung ebenfalls denkbar und sinnvoll.

### Systemüberblick

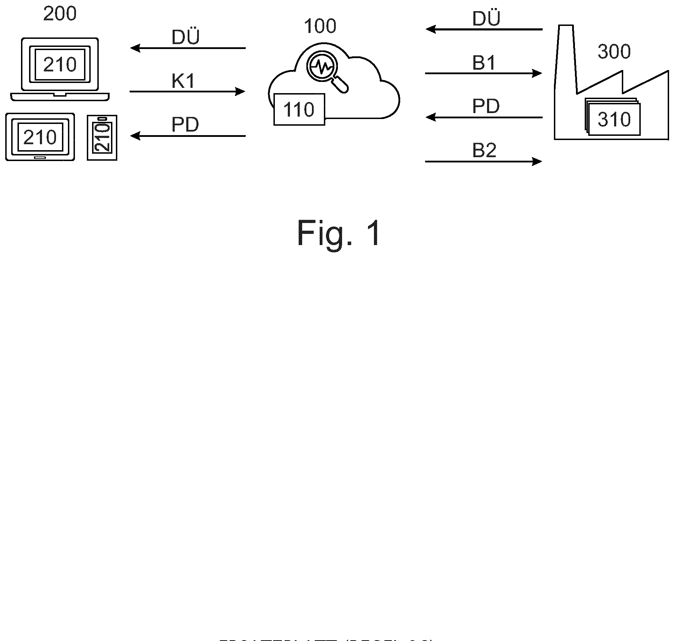

Fig. 1 zeigt eine beispielhafte Systemumgebung für ein Verfahren zur Anpassung einer Übertragung von Prozessdaten PD zwischen einer Vorrichtung 310 eines Automatisierungssystems 300 und eines ersten Computersystems 100. Die Vorrichtung 310 des Automatisierungssystems kann eine industrielle Steuerungsvorrichtung, wie beispielsweise eine speicherprogrammierbare Steuerung (SPS), ein Industrie-PC (IPC), ein IoT-Gateway, ein Edge-Controller, usw. sein. Die Prozessdaten PD werden wie herkömmlich bei der Ausführung eines technischen Prozesses (in Fig. 1 nicht dargestellt) erzeugt bzw. geliefert und über die Vorrichtung 310 erfasst.

Die Vorrichtung 310 des Automatisierungssystems kann einen OPC UA-Server umfassen. OPC UA (Open Platform Communications - Unified Architecture) ist ein Standard für den Datenaustausch als plattformunabhängige, service-orientierte Architektur (SOA) und hat die Fähigkeit, Maschinendaten zu transportieren und maschinenlesbar semantisch zu beschreiben (siehe https://de.wikipedia.org/wiki/OPC_Unified_Architecture).

Das erste Computersystem 100 ist insbesondere ein Cloud-System (z.B. in Form einer Public Cloud und/oder Private Cloud), welches wie herkömmlich einen oder mehrere Computer bzw. Server umfasst. Alternativ kann das erste Computersystem 100 auch aus einem oder mehreren "normalen" Computern bzw. Servern bestehen, welche vor Ort (z.B. als Teil des Automatisierungssystems 300) oder an einem entfernten Ort betrieben werden. Auch Kombinationen sind denkbar.

Nachfolgend werden bevorzugte Ausführungsformen der Einfachheit halber nur in Bezug auf eine industrielle Steuerungsvorrichtung 310 und ein Cloud-System 100 erläutert. Es sei jedoch betont, dass Aspekte der Erfindung sich ebenso in anderen Arten von Vorrichtungen und Systemen, wie oben erläutert, einsetzen lassen.

Die industrielle Steuerungsvorrichtung 310 des Automatisierungssystems 300 und das Cloud-System 100 sind über ein entsprechendes Netzwerksystem miteinander verbunden und tauschen im Regelbetrieb Prozessdaten PD aus. Insbesondere werden Prozessdaten PD von der Steuerungsvorrichtung 310 an das Cloud-System 100 übertragen. Bei den Prozessdaten PD handelt es sich um Werte, Signale und/oder Informationen, welche insbesondere während des Betriebs von Sensoren und/oder Aktoren, welche mit der Steuerungsvorrichtung 310 verbunden sind, entstehen. Dies ist insbesondere im Kontext der Automatisierungstechnik der Fall, wo kontinuierlich eine große Anzahl solcher Daten erzeugt wird. Unter Daten sind im Rahmen der Erfindung sowohl Daten zu einem bestimmten Zeitpunkt, wie auch Zeitreihen, d.h. zeitliche Abfolgen von Daten, gemeint.

Die Steuerungsvorrichtung 310 kann eine Steuerungs-Applikation umfassen, welche die Prozessdaten PD als Eingabe verarbeitet und entsprechende Ausgaben erzeugt. Des Weiteren kann ein Teil der Steuerungs-Applikation für die Übertragung von in der Steuerungs-Applikation definierten Prozessdaten PD zu dem Cloud-System 100 zuständig sein. Dieser Teil der Steuerungs-Applikation kann auch getrennt vom Rest der Steuerungsvorrichtung 310 sein.

Das Cloud-System 100 kann eine Cloud-Applikation 110 umfassen, beispielsweise in Form der WAGO Cloud. Die Cloud-Applikation 110 kann unter anderem eine Benutzerverwaltung, eine Projektverwaltung, eine Geräteverwaltung, ein Alarmmanagementsystem, Dashboards, Trends und/oder Exportfunktionalitäten umfassen.

In einigen Ausführungsformen kann auch eine Datenpunktübersicht DÜ zum Einsatz kommen. Diese umfasst vorzugsweise die der Steuerungsvorrichtung 310 zur Verfügung stehenden Datenpunkte. Ein Datenpunkt kann insbesondere einen Key und einen Value, z. B. "Sensor_UG12 = 20.0" umfassen.

Des Weiteren gibt es in der Ausführungsform nach Fig. 1 weitere Computersysteme (wie beispielsweise das zweite Computersystem 200 in Fig. 1), welche in Form beliebiger Endgeräte ausgeprägt sein können (z.B. Desktop-PC, Laptop, Smartphone, Tablet, Mixed-Reality-Geräte, usw.). Ein zweites Computersystem 200, nachfolgend auch Client-System genannt, kann unter anderem einen OPC UA-Client umfassen.

Das Client-System 200 und das Cloud-System 100 sind über ein entsprechendes Netzwerksystem miteinander verbunden und tauschen im Regelbetrieb Daten aus. Dabei werden insbesondere Anfragen von einer auf dem Client-System 200 laufenden Client-Anwendung 210 an das Cloud-System 100 gestellt und das Cloud-System 100 antwortet entsprechend der Anfrage mit einer Antwort (vgl. Request-Response-Methodik). Die Client-Anwendung 210 kann insbesondere eine Webanwendung sein, welche beispielsweise in einem Webbrowser läuft. Eine solche Webanwendung stellt z. B. die WAGO Cloud bereit.

### Analyse des Nutzungsverhaltens durch maschinelles Lernen

Durch Ansätze, Verfahren und/oder Algorithmen des sogenannten "maschinellen Lernens" wird in Ausführungsformen der Erfindung basierend auf einem oder mehreren Nutzungsverhalten hinsichtlich der Nutzung der Prozessdaten PD eine Vorhersage getroffen, welche Prozessdaten PD zukünftig für den oder die Nutzer auch wirklich benötigt werden.

Zu diesem Zweck umfasst die Cloud-Applikation 110 vorzugsweise ein maschinelles Lernsystem (welches in alternativen Ausführungsformen auch in einem weiteren Cloud-System laufen kann). Basierend auf den Prozessdaten PD und dem tatsächlichen Nutzungsverhalten innerhalb der Cloud-Applikation 110 bzw. dem Cloud-System 100 und/oder dem Computersystem 200 erfolgt eine Analyse des Nutzungsverhaltens der Benutzer hinsichtlich der Datenverwendung. Das Nutzungsverhalten kann insbesondere aus Informationen der Verwendungshäufigkeit, der Verwendungsdauer und des Verwendungszeitpunkts der Prozessdaten PD ermittelt werden. Das Nutzungsverhalten wird in einer bevorzugten Ausführungsform der Erfindung also basierend auf den Aktionen (und damit verbundenen Anfragen) innerhalb der Client-Anwendung 210 auf dem Client-System 200 und/oder der damit zusammenhängenden Aktionen innerhalb des Cloud-Systems 100 bestimmt. Beispielsweise wird ein Alarm zwar in der Client-Anwendung 210 definiert (z.B. mittels einer Regel), aber die Alarmregel wird ständig innerhalb des Cloud-Systems 100 ausgewertet und bei Auslösen des Alarms z.B. auch an externe Systeme weitergeleitet (z.B. per SMS, Mail, usw.).

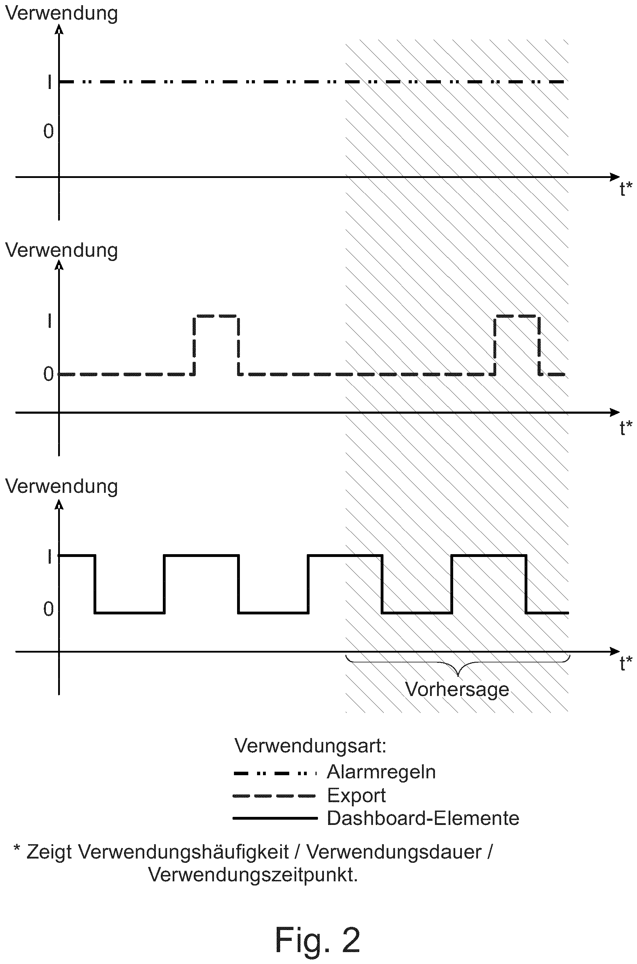

Basierend auf dem Nutzungsverhalten kann eine Vorhersage hinsichtlich des zu erwartenden Nutzungsverhaltens erzeugt werden. Fig. 2 zeigt Beispiele für erfasstes Nutzungsverhalten und die Vorhersage des zu erwartenden Nutzungsverhaltens.

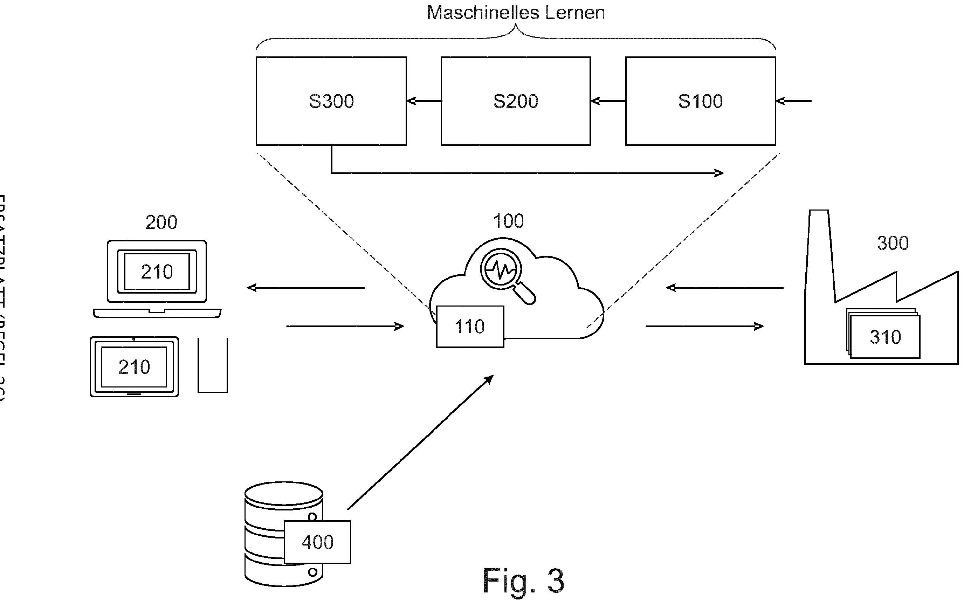

Maschinelles Lernen gilt als ein Teilgebiet der "Künstlichen Intelligenz". Ein bekannter Ansatz im Kontext des maschinellen Lernens sind sogenannte "neuronale Netze". Der Prozess des maschinellen Lernens zur Ermittlung des Nutzungsverhaltens kann in einigen Ausführungsformen der Erfindung aus mehreren Prozessschritten bestehen, die in Fig. 3 beispielhaft dargestellt sind. Beispielsweise können, nach einer Vorverarbeitung (S100 - z. B. mehrere Daten zu Vektoren zusammenfassen), die resultierenden Daten als Eingabe in ein neuronales Netz dienen (S200) und die Ausgaben daraus in einem weiteren Schritt (S300) noch weiter kombiniert oder in Zusammenhang gesetzt werden. Auch Ansätze mit nur einigen der oben beschriebenen Schritte sind denkbar.

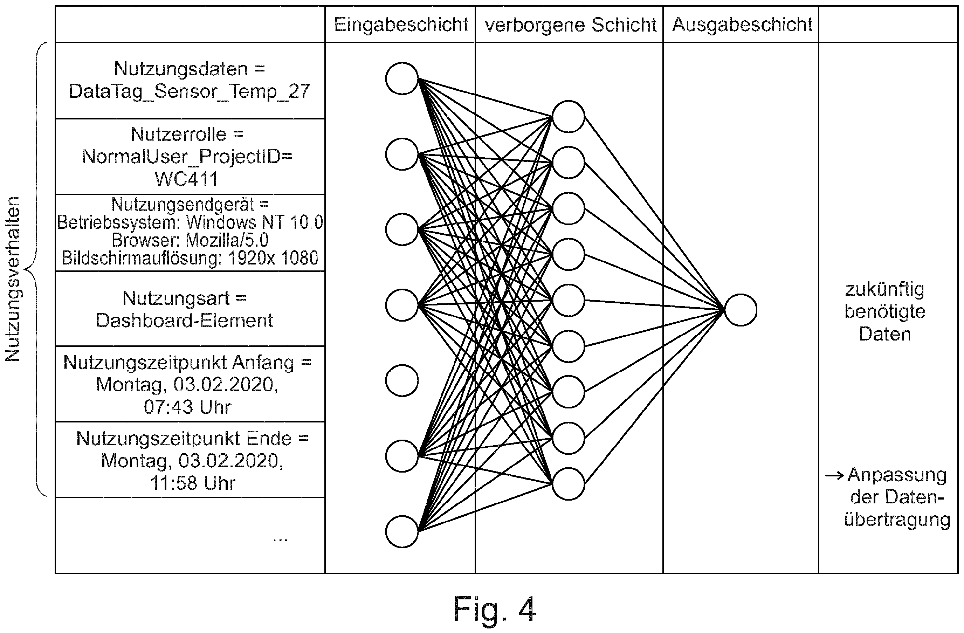

Als stark vereinfachtes Beispiel ist in Fig. 4 ein Aufbau eines neuronalen Netzes abgebildet. Ein neuronales Netz umfasst üblicherweise eine Vielzahl miteinander verbundener künstlicher Neuronen. Diese werden üblicherweise in Schichten (Layers) angeordnet. Dabei bezeichnet man die Schicht, welche die Eingabedaten erhält, als Input Layer. Der Output Layer erzeugt die Ausgabe. Zwischen Input und Output Layer können sich beliebig viele weitere Schichten - sogenannte Hidden Layers - befinden. Jedes Neuron erzeugt nun eine individuelle Ausgabe, die abhängig von der jeweiligen Eingabe und der internen Aktivierungsfunktion des Neurons ist. Dabei werden alle Ausgaben einer Schicht als Eingaben für die jeweils nächste Schicht weitergeleitet, wobei jede Verbindung die Informationen unterschiedlich stark weiterleiten kann. Die Stärke jeder einzelnen Verbindung wird beim Erzeugen und Trainieren des neuronalen Netzes durch einen speziellen Lernalgorithmus (z.B. Back-Propagation) festgelegt (vgl. https://blog.iao.fraunhofer.de/spielarten-der-kuenstlichenintelligenz-maschinelles-lernen-und-kuenstliche-neuronalenetze/).

In Ausführungsformen der Erfindung kann das Nutzungsverhalten beispielsweise basierend aus unterschiedlichsten Nutzungsinformationen ermittelt und anschließend analysiert werden, d.h. welche Daten werden zu welchem Zeitpunkt, wie lange angefragt bzw. verwendet, in welchem Kontext werden diese angefragt bzw. verwendet und wer frägt diese an bzw. verwendet diese. Diese Informationen können durch die Nutzung der Client-Applikation 210 und der damit verbundenen Anfragen und Aktionen des Cloud-Systems 100 erfasst werden.

Des Weiteren können hinsichtlich des Nutzungsverhaltens auch externe Daten aus externen Datenquellen 400 (siehe Fig. 3) herangezogen werden. Dies können beispielsweise Kalenderinformationen sein, aus denen relevante Kenntnisse abgeleitet werden können (z.B. hat die Person bzw. der Nutzer ggf. Urlaub in nächster Zeit und benötigt daher keine Prozessdaten PD, sondern nur eine Zusammenfassung nach seinem Urlaub).

### Anpassung der Datenübertragung

Auf Basis des gelernten Nutzungsverhaltens und/oder des zu erwartenden Nutzungsverhaltens kann die Datenübertragung zwischen der Steuerungsvorrichtung 310 und dem Cloud-System 100 angepasst werden, insbesondere iterativ. Die Anpassung der Datenübertragung kann durch Befehle bzw. neue Konfigurationen erfolgen, welche von dem ersten Cloud-System 100 an die Steuerungsvorrichtung 310 gesendet werden. Durch diese kann beispielsweise die Einstellung eines SPS-Programms hinsichtlich der Datenübertragung anpasst werden oder auch die Konfiguration der Datenübertragung eines OPC UA-Servers geändert werden.

Die Datenübertragung kann insbesondere durch eine Festlegung der sogenannten Sampling-Rate, der Festlegung der Publishing-Rate, der Festlegung eines Speicherorts, der Festlegung der zu übertragenden Datenpunkte und/oder der Festlegung möglicher Vorverarbeitungen (z. B. Bildung von Aggregatwerten) angepasst werden. Durch solche Anpassungen werden dann beispielsweise Werte einzelner Datenpunkte gar nicht mehr gesendet, bestimmte Datenpunkte "umgeleitet" zu einem anderen Speicher, nur Aggregate, Min.-Werte, Max.-Werte, usw. gesendet, das Zeitintervall angepasst und/oder Daten entsprechend der Verwendung gruppiert und gemeinsam versendet.

In einer Ausführungsform erfolgt überhaupt keine Definition derjenigen Datenpunkte, welche in das Cloud-System 100 übertragen werden sollen, mehr in der Steuerungsvorrichtung 310. Stattdessen werden initial alle Daten, welche die Steuerungsvorrichtung 310 erfasst, in das Cloud-System 100 übertragen und das System passt dann (nach gewisser Zeit) die Datenübertragung so an, dass nur noch die benötigten Daten zur notwendigen Zeit übertragen werden, wie oben beschrieben.

### Beispielhafte Anwendung: Nutzung der WAGO Cloud für das Facility-Management eines Serverraums

Hinsichtlich der Zutrittskontrolle zum Serverraum hat der zuständige Facility-Manager eine Alarmregel innerhalb der WAGO Cloud definiert, welche bei einem unbefugten Zutrittsversuch eine Benachrichtigung an den Facility-Manager sendet. Das System hat durch das Nutzungsverhalten bzw. die Verwendungsart (Alarm) gelernt, dass die Daten der Zutrittskontrolle rund um die Uhr benötigt werden und somit kontinuierlich von der Steuerungsvorrichtung gesendet werden müssen.

Für die Nachvollziehbarkeit des gesamten Stromverbrauchs der Server im Serverraum verwendet der Facility-Manager einen Trend innerhalb der WAGO Cloud. Das System hat durch das Nutzungsverhalten des Facility-Managers gelernt, dass Daten für den Trend nur einmal im Monat zur Erstellung eines Reports benötigt werden und es daher ausreicht, die Daten als Tages-Aggregate auf der Steuerungsvorrichtung zusammenzufassen und an das Cloud-System zu senden.

Für die Überwachung mehrerer Betriebszustände in einem Serverraum verwendet der Facility-Manager ein Dashboard mit mehreren Dashboard-Elementen. Das System hat durch das Nutzungsverhalten des Facility-Managers gelernt, dass Daten für die Dashboard-Elemente nur von Montag bis Freitag zwischen 8 Uhr und 16 Uhr an das Cloud-System gesendet werden müssen.

## Patentansprüche

1. Ein Verfahren zur Anpassung der Datenübertragung von einer industriellen Steuerungsvorrichtung (310) an ein Cloud-System (100), wobei das Verfahren die folgenden von einer Cloud-Applikation (110) durchgeführten Schritte umfasst:
Ermitteln eines Nutzungsverhaltens mittels maschinellen Lernens, wobei das Nutzungsverhalten sich auf die Nutzung der von der industriellen Steuerungsvorrichtung (310) übertragenen Daten, insbesondere Prozessdaten (PD), durch das Cloud-System (100) oder ein damit verbundenes Computersystem (200) bezieht; und
Senden zumindest eines Befehls an die industrielle Steuerungsvorrichtung (310) zur Anpassung der Datenübertragung von der industriellen Steuerungsvorrichtung (300) an das Cloud-System (100) basierend auf dem ermittelten Nutzungsverhalten.

2. Das Verfahren nach Anspruch 1, wobei das ermittelte Nutzungsverhalten zumindest eine Verwendungshäufigkeit, zumindest eine Verwendungsdauer, zumindest einen Verwendungszeitpunkt und/oder zumindest eine Verwendungsart umfasst.

3. Das Verfahren nach Anspruch 1 oder 2, wobei der zumindest ein Befehl zur Anpassung der Datenübertragung ein Befehl ist zum:
Auswählen einer Untermenge der Daten zur Übertragung;
Nicht-Senden bestimmter Daten;
Umleiten bestimmter Daten zu einem anderen Datenspeicher;
Senden von Datenaggregaten, insbesondere von Minimalwerten und/oder Maximalwerten;
Anpassen eines Zeitintervalls, insbesondere einer Sampling-Rate und/oder Publishing-Rate, bestimmter Daten; und/oder
Gruppieren von Daten.

4. Das Verfahren nach einem der vorstehenden Ansprüche, wobei das Nutzungsverhalten über eine vorgegebene Zeitspanne ermittelt wird, wobei das Verfahren ferner ein Erstellen eines Vorhersagemodells für eine zukünftige Nutzung der Daten umfasst.

5. Das Verfahren nach einem der vorstehenden Ansprüche, wobei das Nutzungsverhalten kontinuierlich bzw. regelmäßig ermittelt wird.

6. Das Verfahren nach einem der vorstehenden Ansprüche, wobei das Nutzungsverhalten sich auf die Nutzung der Daten durch einen oder mehrere Benutzer oder durch eine Benutzergruppe bezieht.

7. Das Verfahren nach einem der vorstehenden Ansprüche, wobei die Steuerungsvorrichtung (310) einen OPC-Server, vorzugsweise einen OPC UA-Server, umfasst und/oder wobei das Computersystem (200) einen OPC-Client, vorzugsweise einen OPC UA-Client, umfasst.

8. Das Verfahren nach einem der vorstehenden Ansprüche, das ferner den folgenden Schritt umfasst:
Empfangen von Daten (PD) von der industriellen Steuerungsvorrichtung (310), ohne dass eine initiale Auswahl der Daten auf der industriellen Steuerungsvorrichtung (310) erfolgt ist.

9. System zur Anpassung der Datenübertragung von einer industriellen Steuerungsvorrichtung (310) an ein Cloud-System (100), wobei das System konfiguriert ist zum Durchführen eines Verfahrens nach einem der vorstehenden Ansprüche 1-8.

10. Ein Computerprogramm mit Anweisungen zum Implementieren eines Verfahrens nach einem der vorstehenden Ansprüche 1-8 bei Ausführung des Programms auf einem oder mehreren Computern.

## Claims

1. A method for adapting data transmission from an industrial control device (310) to a cloud system (100), the method comprising the following steps performed by a cloud application (110):
determining a usage behavior by means of machine learning, wherein the usage behavior relates to the use of the data transmitted by the industrial control device (310), in particular process data (PD), by the cloud system (100) or a computer system (200) connected thereto; and
sending at least one command to the industrial control device (310) to adapt the data transmission from the industrial control device (300) to the cloud system (100) based on the determined usage behavior.

2. The method according to claim 1, wherein the determined usage behavior comprises at least one frequency of use, at least one duration of use, at least one time of use and/or at least one type of use.

3. The method according to claim 1 or 2, wherein the at least one data transmission adjustment command is a command to:
Select a subset of the data for transfer;
Not sending certain data;
Redirect certain data to another data storage;
Transmission of data aggregates, in particular minimum values and/or maximum values;
Adjusting a time interval, in particular a sampling rate and/or publishing rate, of certain data; and/or
Grouping of data.

4. The method according to any of the preceding claims, wherein the usage behavior is determined over a predetermined period of time, wherein the method further comprises creating a prediction model for a future usage of the data.

5. The method according to one of the preceding claims, wherein the usage behavior is determined continuously or regularly.

6. The method according to any one of the preceding claims, wherein the usage behavior refers to the usage of the data by one or more users or by a user group.

7. The method according to any one of the preceding claims, wherein the control device (310) comprises an OPC server, preferably an OPC UA server, and/or wherein the computer system (200) comprises an OPC client, preferably an OPC UA client.

8. The method according to any one of the preceding claims, further comprising the following step of:
Receiving data (PD) from the industrial control device (310) without an initial selection of the data having been made on the industrial control device (310).

9. A system for adapting data transmission from an industrial control device (310) to a cloud system (100), wherein the system is configured to perform a method according to any one of the preceding claims 1-8.

10. A computer program comprising instructions for implementing a method according to any of the preceding claims 1-8 during performing the program on one or a plurality of computers.

## Revendications

1. Procédé d'adaptation de la transmission de données d'un dispositif de commande industriel (310) à un système en nuage (100), dans lequel le procédé comprend les étapes suivantes, réalisées par une application en nuage (110) : la détermination d'un comportement d'utilisation au moyen d'un apprentissage machine, dans lequel le comportement d'utilisation se réfère à l'utilisation de données transmises par le dispositif de commande industriel (310), en particulier de données de processus (PD), par le système en nuage (100) ou un système informatique (200) relié à celui-ci ; et
l'envoi au dispositif de commande industriel (310) d'au moins un ordre pour l'adaptation de la transmission de données au système en nuage (100) par le dispositif de commande industriel (300), sur la base du comportement d'utilisation déterminé.

2. Procédé selon la revendication 1, dans lequel le comportement d'utilisation déterminé comprend au moins une fréquence d'utilisation, au moins une durée d'utilisation, au moins un moment d'utilisation et/ou au moins un type d'utilisation.

3. Procédé selon la revendication 1 ou 2, dans lequel l'au moins un ordre d'adaptation de la transmission de données est un ordre pour :
sélectionner un sous-ensemble des données de transmission ;
ne pas envoyer de données déterminées ;
rediriger des données déterminées vers une autre mémoire de données ;
envoyer des groupes de données, en particulier des valeurs minimales et/ou valeurs maximales ;
adapter un intervalle de temps en particulier un taux d'échantillonnage et/ou taux de publication, des données déterminées ; et/ou
regrouper des données.

4. Procédé selon l'une des revendications précédentes, dans lequel le comportement d'utilisation est déterminé sur un intervalle de temps prédéfini, dans lequel le procédé comprend de plus une création d'un modèle de prédiction pour une utilisation future des données.

5. Procédé selon l'une des revendications précédentes, dans lequel le comportement d'utilisation est déterminé en continu ou régulièrement.

6. Procédé selon l'une des revendications précédentes, dans lequel le comportement d'utilisation se réfère à l'utilisation de données par un ou plusieurs utilisateurs ou par un groupe d'utilisateurs.

7. Procédé selon l'une des revendications précédentes, dans lequel le dispositif de commande (310) comprend un serveur OPC, de préférence un serveur UA OPC, et/ou dans lequel le système informatique (200) comprend un client OPC, de préférence un client UA OPC.

8. Procédé selon l'une des revendications précédentes, comprenant de plus l'étape suivante :
la réception de données (PD) du dispositif de commande industriel (310) sans qu'une sélection initiale de données sur le dispositif de commande industriel (310) ne soit effectuée.

9. Système d'adaptation de la transmission de données d'un dispositif de commande industriel (310) à un système en nuage (100), dans lequel le système est configuré pour la réalisation d'un procédé selon l'une des revendications précédentes 1 à 8.

10. Programme informatique avec des instructions de mise en œuvre d'un procédé selon l'une des revendications précédentes 1 à 8 lors de l'exécution du programme sur un ou plusieurs calculateurs.
